# EUROPEAN PATENT APPLICATION

(11) **EP 4 489 116 A1**
(43) Date of publication of application: **08.01.2025**
(21) Application number: 22936757.8
(22) Date of filing: 11.04.2022
(51) Int. Cl.: H01M 4/38, H01M 4/48, H01M 4/587

(54) **SILICON-CARBON COMPOSITE MATERIAL, METHOD FOR PREPARING SILICON-CARBON COMPOSITE MATERIAL, NEGATIVE ELECTRODE SHEET, AND ELECTROCHEMICAL DEVICE**

(71) Applicant: Ningde Amperex Technology Limited, Ningde, Fujian 352100 (CN)
(72) Inventor: HU, Guangwu, Ningde, Fujian 352100 (CN); CUI, Hang, Ningde, Fujian 352100 (CN); XIE, Yuansen, Ningde, Fujian 352100 (CN)
(74) Representative: Icosa
(86) International application number: PCT/CN2022/086033
(87) International publication number: WO 2023/197097

(57) **Abstract**

This application provides a silicon-carbon composite material, a method for preparing silicon-carbon composite material, a negative electrode plate, and an electrochemical device. The silicon-carbon composite material includes a core portion and a shell layer on a surface of the core portion, where the core portion includes a silicon-based material and/or graphite, the shell layer includes a silicon-carbon composite, and the silicon-carbon composite includes a silicon-oxygen compound SiOₓ, where 0 < *x* < 2. The silicon-carbon composite material provided in this application allows the electrochemical device to have both high energy density and long cycle life.

## Description

### TECHNICAL FIELD

This application pertains to the field of electrochemical technology, and specifically relates to a silicon-carbon composite material, a method for preparing silicon-carbon composite material, a negative electrode plate, and an electrochemical device.

### BACKGROUND

Due to advantages such as no memory effect, small size, light weight, and environmental friendliness, electrochemical devices such as lithium-ion batteries have been widely used in various aspects of modem life. In recent years, electrochemical devices have seen rapid development, particularly in the fields of new energy vehicles and large-scale energy storage. However, in the negative electrode materials of the conventional commercial electrochemical devices, such as lithium-ion batteries, carbon-based materials such as graphite have a low capacity, resulting in low energy density of the lithium-ion batteries; and silicon-based materials are prone to swelling, leading to poor cycling performance of the lithium-ion batteries. This greatly limits their large-scale application in the electrochemical devices.

### SUMMARY

This application is intended to provide a silicon-carbon composite material, a method for preparing silicon-carbon composite material, a negative electrode plate, and an electrochemical device, so as to allow the electrochemical device to have both high energy density and long cycle life.

A first aspect of this application provides a silicon-carbon composite material including a core portion and a shell layer on a surface of the core portion, where the core portion includes a silicon-based material and/or graphite, the shell layer includes a silicon-carbon composite, and the silicon-carbon composite includes a silicon-oxygen compound SiO*ₓ*, where 0 < *x* < 2.

In any embodiment of this application, the silicon-based material includes elemental silicon and/or silicon monoxide.

In any embodiment of this application, the silicon-carbon composite further includes amorphous carbon.

The silicon-carbon composite material of this application includes the core portion and the shell layer, where the core portion includes the silicon-based material and/or graphite, and thus can provide high energy density for a negative electrode plate of a lithium-ion battery; and the shell layer includes the silicon-carbon composite, which helps to buffer volume swelling of the core portion during reversible intercalation and deintercalation of lithium ions, enhancing conductivity of the silicon-carbon composite material and improving cycling performance of the silicon-carbon composite material.

In any embodiment of this application, the elemental silicon includes at least one of silicon nanoparticles or silicon microparticles, and a median particle size of the silicon nanoparticles is 200 nm to 1000 nm.

In any embodiment of this application, materials for preparing the silicon-carbon composite include an organosilicon source.

In any embodiment of this application, a thickness of the shell layer is 5 nm to 100 nm.

In any embodiment of this application, based on a total weight of the shell layer, a weight percentage of the amorphous carbon in the shell layer is 2% to 30%.

In the silicon-carbon composite material of this application, the thickness of the shell layer falling within an appropriate range can ensure high energy density of the silicon-carbon composite material, and can suppress the volume swelling of the silicon-based material in the core portion, allowing the silicon-carbon composite material to have excellent cycling performance.

In any embodiment of this application, the silicon-oxygen compound SiO*ₓ* is dispersed in the amorphous carbon in the form of nanoparticle, and a particle size of the silicon-oxygen compound SiO*ₓ* is 2 nm to 5 nm.

In any embodiment of this application, a weight ratio of the core portion to the shell layer is 10 to 200.

In the silicon-carbon composite material of this application, the weight ratio of the core portion to the shell layer falling within an appropriate range is conducive to improving the energy density and cycling performance of the lithium-ion battery.

In any embodiment of this application, a median particle size of the silicon nanoparticles is 300 nm to 800 nm.

In any embodiment of this application, a thickness of the shell layer is 5 nm to 20 nm.

In any embodiment of this application, based on a total weight of the shell layer, a weight percentage of the amorphous carbon in the shell layer is 3% to 10%.

In any embodiment of this application, a particle size of the silicon-oxygen compound SiO*ₓ* is 3 nm to 4 nm.

In any embodiment of this application, a weight ratio of the core portion to the shell layer is 20 to 90.

A second aspect of this application provides a method for preparing the silicon-carbon composite material according to the first aspect of this application, including:
a coating step, including coating a silicon-based material core and/or a graphite core with an organosilicon source, and converting the organosilicon source into polysilsesquioxane to obtain polysilsesquioxane-coated core particles; and
a carbonization step, including carbonizing the polysilsesquioxane that coats the core particles to obtain the silicon-carbon composite material.

In the preparation method of the silicon-carbon composite material of this application, the organosilicon source can undergo an in-situ condensation reaction on a surface of the silicon-based material and/or graphite under catalysis of a base, to obtain core particles coated with a polysilsesquioxane layer. The resulting product is calcined at high temperature under an inert gas atmosphere, where organic groups in the polysilsesquioxane layer can be converted into amorphous carbon, to ultimately obtain the silicon-carbon composite material with excellent electrochemical performance as described in this application.

In any embodiment of this application, the organosilicon source includes at least one of vinyltriethoxysilane, vinyltrimethoxysilane, propyltriethoxysilane, propyltrimethoxysilane, ethyltriethoxysilane, ethyltrimethoxysilane, methyltriethoxysilane, methyltrimethoxysilane, phenyltriethoxysilane, or ureidopropyltriethoxysilane.

A third aspect of this application provides a negative electrode plate including a current collector and an active substance layer disposed on a surface of the current collector, where the active substance layer includes the silicon-carbon composite material according to the first aspect of this application or a silicon-carbon composite material prepared by using the method according to the second aspect of this application.

A fourth aspect of this application provides an electrochemical device including the negative electrode plate according to the third aspect of this application.

### BRIEF DESCRIPTION OF DRAWINGS

FIG. 1 is a schematic diagram of a preparation process of an embodiment of a silicon-carbon composite material of this application.
FIG. 2 is an XRD pattern of an embodiment of a silicon-carbon composite material of this application.
FIG. 3 is a TEM image of an embodiment of a silicon-carbon composite material of this application.

### DETAILED DESCRIPTION

To make the objectives, technical solutions, and advantages of this application clearer, the following clearly and completely describes the technical solutions of this application with reference to some embodiments. Apparently, the described embodiments are some but not all of the embodiments of this application. Relevant embodiments described herein are illustrative and used to provide a basic understanding of this application. Some embodiments of this application should not be construed as any limitations on this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual numerical value may itself be a lower limit or an upper limit which can be combined with any other point or individual numerical value or combined with another lower limit or upper limit to form a range not expressly recorded.

In the description of this specification, unless otherwise specified, "more than" and "less than" are inclusive of the present number.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

The term "about" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other values are sometimes presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

A list of items connected by the terms "at least one of", "at least one piece of", and "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

Currently, in negative electrode materials of conventional commercial lithium-ion batteries, graphite is hindered from further application in lithium-ion batteries due to its low capacity (372 mAh/g) and safety hazards associated with lithium dendrites. Developing negative electrode materials with high energy density and high safety for lithium-ion batteries is a focus in the advancement of current lithium battery technology. Compared with carbon-based materials such as graphite, silicon-based materials (including a silicon-oxygen compound) are considered as the most promising negative electrode materials for lithium batteries that can replace graphite due to their characteristics of low cost, high specific capacity, and suitable operating voltage.

Compared with elemental silicon, the silicon-oxygen compound (SiO*ₓ*, 0 < *x* < 2) further has the following advantages in the field of negative electrode materials of lithium-ion batteries: (1) inert LiiO and lithium silicate generated during initial lithiation can effectively alleviate volume changes during charging and discharging, helping to maintain structural stability; and (2) a natural amorphous form helps to reduce pulverization of materials caused by uneven stress during lithiation/delithiation. However, large volume swelling and poor conductivity still limit the large-scale application of the silicon-based materials in the lithium-ion batteries.

Although carbon materials as the negative electrode materials have a small specific capacity, they can serve as a good conductive medium and buffer matrix for the silicon-based materials due to their advantages such as low cost, good conductivity, and outstanding chemical and thermal stability. Therefore, the inventors have found that it is a good method to combine a silicon-oxygen compound and carbon through carbon coating to prepare a silicon-carbon composite negative electrode material. However, the inventors have also found that the carbon coating can enhance conductivity of the composite material and buffer volume swelling of the silicon-based material to some extent, but a thin carbon layer cannot effectively suppress the significant volume swelling of the silicon-based material, and a thick carbon layer significantly reduces energy density of the composite material.

To solve the foregoing problems, the inventors, through extensive research, have proposed a silicon-carbon composite material that can suppress volume swelling and has high capacity. With such silicon-carbon composite material used, the electrochemical device can have high energy density and cycling performance.

### Silicon-carbon composite material

A first aspect of some embodiments of this application provides a silicon-carbon composite material including a core portion and a shell layer on a surface of the core portion, where the core portion includes a silicon-based material and/or graphite, the shell layer includes a silicon-carbon composite, and the silicon-carbon composite includes a silicon-oxygen compound SiOₓ, where 0 < *x* < 2.

The silicon-carbon composite material of this application includes the core portion and the shell layer, where the core portion includes the silicon-based material and/or graphite, and thus can increase energy density of the electrochemical device; and the shell layer includes the silicon-carbon composite, which helps to buffer volume swelling of the core portion during reversible intercalation and deintercalation of active ions such as lithium ions, enhancing conductivity of the silicon-carbon composite material, thereby improving cycling performance of the electrochemical device.

In some embodiments, the silicon-based material includes elemental silicon and/or silicon monoxide. The elemental silicon and the silicon monoxide have high capacity, and can increase the energy density of the electrochemical device.

In some embodiments, the elemental silicon includes at least one of silicon nanoparticles or silicon microparticles, and preferably silicon nanoparticles.

In some embodiments, a median particle size of the silicon nanoparticles is 200 nm to 1000 nm, for example, the median particle size of the silicon nanoparticles is 200 nm, 300 nm, 400 nm, 500 nm, 600 nm, 700 nm, 800 nm, 900 nm, 1000 nm, or within a range defined by any two of these values. Preferably, the median particle size of the silicon nanoparticles is 300 nm to 800 nm. In this application, the median particle size of the silicon-carbon nanoparticles falling within an appropriate range can ensure high capacity of the silicon-carbon composite material and control the volume swelling of the silicon-carbon composite material during cycling, and facilitates coating of the shell layer on the silicon-carbon nanoparticles. The median particle size of the silicon nanoparticles is a corresponding particle size when a cumulative particle size distribution percentage of the silicon nanoparticles reaches 50%. Physically, it means that particles with a particle size greater than the median particle size account for 50%, and particles with a particle size smaller than the median particle size also account for 50%. The particle size can be tested using a laser particle size analyzer (NanoBrook 90 Plus).

In some embodiments, a median particle size of the silicon microparticles may be 2000 nm.

In some embodiments, materials for preparing the silicon-carbon composite include an organosilicon source, where the organosilicon source includes at least one of vinyltriethoxysilane, vinyltrimethoxysilane, propyltriethoxysilane, propyltrimethoxysilane, ethyltriethoxysilane, ethyltrimethoxysilane, methyltriethoxysilane, methyltrimethoxysilane, phenyltriethoxysilane, or ureidopropyltriethoxysilane.

In this application, the organosilicon source can undergo an in-situ condensation reaction on a surface of the silicon-based material under catalysis of a basic solution, to obtain silicon-based material particles coated with a polysilsesquioxane layer. Organic groups in the polysilsesquioxane layer can be converted into amorphous carbon during subsequent carbonization, to obtain a silicon-carbon composite with the silicon-oxygen compound SiO*ₓ* distributed in the amorphous carbon.

In some embodiments, the silicon-carbon composite in the shell layer includes a silicon-oxygen compound SiO*ₓ* and amorphous carbon, where the silicon-oxygen compound SiO*ₓ* is dispersed in the amorphous carbon in the form of nanoparticle. A particle size of the silicon-oxygen compound SiO*ₓ* is 2 nm to 5 nm, for example, the particle size of the silicon-oxygen compound SiO*ₓ* is 2 nm, 3 nm, 4 nm, 5 nm, or within a range defined by any two of these values. Preferably, the particle size of the silicon-oxygen compound SiO*ₓ* is 3 nm to 4 nm.

In this application, the silicon-oxygen compound SiO*ₓ* is evenly distributed in the amorphous carbon in the form of nanoparticle. The shell layer formed by the silicon-oxygen compound and the amorphous carbon has advantages such as good chemical stability and high conductivity, which can constrain the volume swelling of the core portion of the silicon-carbon composite material during reversible intercalation and deintercalation of active ions such as lithium ions, and enhance the conductivity of the silicon-carbon composite material.

In some embodiments, a thickness of the shell layer is 5 nm to 100 nm, for example, the thickness of the shell layer is 5 nm to 95 nm, 10 nm to 90 nm, 15 nm to 85 nm, 20 nm to 80 nm, 35 nm to 75 nm, 40 nm to 70 nm, or 55 nm to 65 nm. Preferably, the thickness of the shell layer is 5 nm to 20 nm.

In this application, the thickness of the shell layer of the silicon-carbon composite material is mainly set from the perspective of implementation feasibility. During coating of the organosilicon source on the silicon-based material, interaction between the organosilicon source and the silicon-based material is not strong, so the thickness of the coating layer needs to be controlled within 100 nm, which helps to obtain the foregoing silicon-carbon composite material of this application. In addition, the thickness of the shell layer falling within the foregoing range can ensure high capacity of the silicon-carbon composite material, and can suppress the volume swelling of the silicon-based material in the core portion, improving the cycling performance of the electrochemical device.

In some embodiments, based on a total weight of the shell layer, a weight percentage of the amorphous carbon in the shell layer is 2% to 30%, for example, the weight percentage of the amorphous carbon is 5%, 10%, 15%, 20%, 25%, 30%, or within a range defined by any two of these values. Preferably, the weight percentage of the amorphous carbon is 3% to 10%. The percentage of the amorphous carbon in the shell layer is mainly determined by the type of the organosilicon source. The organosilicon source undergoes an in-situ condensation reaction to obtain a polysilsesquioxane layer, and silicon-carbon bonds in the polysilsesquioxane layer can break during subsequent carbonization to form the amorphous carbon.

In some embodiments, a weight ratio of the core portion to the shell layer is 10 to 200, for example, the weight ratio of the core portion to the shell layer is 15 to 195, 30 to 180, 45 to 165, 60 to 150, 75 to 135, or 90 to 120. Preferably, the weight ratio of the core portion to the shell layer is 20 to 90.

In this application, the weight ratio of the core portion to the shell layer of the silicon-carbon composite material falling within the foregoing range is conducive to improving the energy density and cycling performance of the electrochemical device. If the weight ratio of the core portion to the shell layer is small, a thick coating shell layer reduces the capacity of the silicon-carbon composite material to some extent; and if the weight ratio of the core portion to the shell layer is large, a thin coating shell layer has difficulty suppressing the volume swelling of the silicon-based material in the core portion, affecting the cycling performance of the silicon-carbon composite material.

A second aspect of some embodiments of this application provides a method for preparing the silicon-carbon composite material according to the first aspect of this application, including the following steps.

S10. Coating step, including coating a silicon-based material core and/or a graphite core with an organosilicon source, and converting the organosilicon source into polysilsesquioxane to obtain polysilsesquioxane-coated core particles.

S20. Carbonization step, including carbonizing the polysilsesquioxane that coats the core particles to obtain the silicon-carbon composite material.

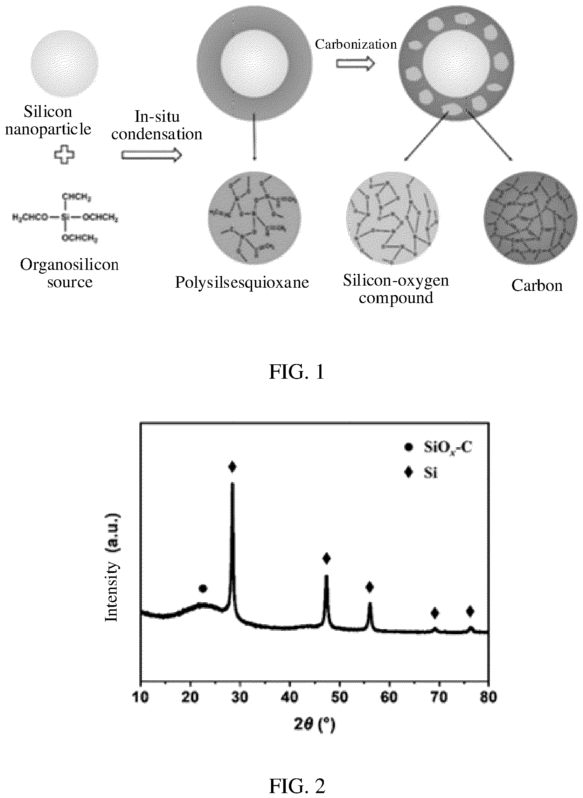

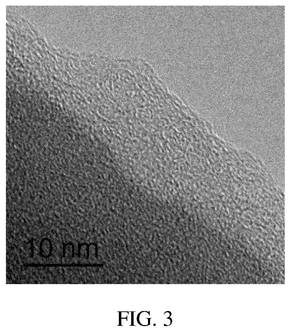

In some embodiments, a silicon nanoparticle being used as the core portion is used as an example, and the embodiment of the preparation process of the silicon-carbon composite material according to the second aspect of this application is shown in FIG. 1. As shown in FIG. 2, the XRD confirms the presence of elemental silicon, silicon-oxygen compound, and amorphous carbon in the prepared silicon-carbon composite material. As shown in FIG. 3, the TEM image clearly shows that the silicon-carbon composite material has a distinct core-shell structure, where the core in the structure is the silicon nanoparticle, and the outer shell layer is composed of a composite of silicon-oxygen compound and carbon distributed uniformly.

In some embodiments, in the foregoing step S10, the organosilicon source includes at least one of vinyltriethoxysilane, vinyltrimethoxysilane, propyltriethoxysilane, propyltrimethoxysilane, ethyltriethoxysilane, ethyltrimethoxysilane, methyltriethoxysilane, methyltrimethoxysilane, phenyltriethoxysilane, or ureidopropyltriethoxysilane. Preferably, the organosilicon source is vinyltriethoxysilane.

In some embodiments, a concentration of the organosilicon source is 0.1 mol/L to 2 mol/L, for example, the concentration of the organosilicon source is 0.2 mol/L to 1.8 mol/L, 0.4 mol/L to 1.6 mol/L, 0.6 mol/L to 1.4 mol/L, or 0.8 mol/L to 1.2 mol/L. Controlling the concentration of the organosilicon source within an appropriate range helps to obtain a shell layer with a suitable thickness, and controlling the thickness of the shell layer within an appropriate range can suppress the volume swelling of the core portion of the silicon-carbon composite material through the shell layer and can ensure high capacity of the silicon-carbon composite material.

In some embodiments, the coating step in S10 further includes the following steps.

S100. In an alcohol-water solution, bring the organosilicon source into contact with the silicon-based material core and/or the graphite core to coat the silicon-based material core and/or the graphite core.

S110. Add a base to the alcohol-water solution to polymerize the polysilsesquioxane precursor into polysilsesquioxane, to obtain the polysilsesquioxane-coated core particles.

In some embodiments, in the foregoing step S100, a volume ratio of alcohol to water in the alcohol-water solution is 0.1 to 10, for example, the volume ratio of alcohol to water in the alcohol-water solution is 0.5, 1, 1.5, 2, 2.5, 3, 3.5, 4, 4.5, 5, 5.5, 6, 6.5, 7, 7.5, 8, 8.5, 9, 9.5, 10, or within a range defined by any two of these values. Preferably, the volume ratio of alcohol to water in the alcohol-water solution is 0.5 to 8. Adjusting the volume ratio of alcohol to water can adjust a concentration of the alcohol-water solution, which in turn helps to adjust the thickness of the shell layer in the silicon-carbon composite material, thereby obtaining a silicon-carbon composite material with excellent electrochemical performance. The volume ratio of alcohol to water falling within an appropriate range helps to obtain a shell layer with a suitable thickness, which ensures high capacity of the silicon-carbon composite material and suppresses the volume swelling of the core portion, thereby allowing the electrochemical device to have excellent cycling performance.

In some embodiments, the alcohol in the alcohol-water solution is not limited to any type, and may be a conventional alcohol well known in the art. For example, the alcohol may be ethanol, methanol, ethylene glycol, glycerol, or the like.

In some embodiments, in the foregoing step S110, a PH value of the system obtained after the base is added to the alcohol-water solution is 9 to 14, for example, the PH value of the system is 9, 10, 11, 12, 13, or within a range defined by any two of these values. Preferably, the PH value of the system is 10 to 13.

In some embodiments, the base is selected from ammonia water. A concentration of the ammonia water is 0.1 mol/L to 2 mol/L, for example, the concentration of the ammonia water is 0.2 mol/L to 1.8 mol/L, 0.4 mol/L to 1.6 mol/L, 0.6 mol/L to 1.4 mol/L, or 0.8 mol/L to 1.2 mol/L.

Adjusting the concentration of the ammonia water can adjust the PH value of the system, and adjusting the PH value of the system can control the thickness of the shell layer in the silicon-carbon composite material, thereby adjusting the electrochemical performance of the silicon-carbon composite material. The PH value of the system falling within an appropriate range helps to obtain a shell layer with a suitable thickness, and controlling the thickness of the shell layer within an appropriate range can suppress the volume swelling of the core portion of the silicon-carbon composite material through the shell layer and can ensure high capacity of the silicon-carbon composite material.

In some embodiments, a reaction temperature of the coating step S10 is 25°C to 80°C, for example, the reaction temperature is 30°C to 75°C, 35°C to 70°C, 40°C to 65°C, 45°C to 60°C, or 50°C to 55°C.

In some embodiments, a reaction time of the coating step S10 is 2 h to 10 h, for example, the reaction time is 3 h, 4 h, 5 h, 6 h, 7 h, 8 h, 9 h, 10 h, or within a range defined by any two of these values.

In this application, adjusting the reaction temperature and time of the coating step can adjust the thickness of the shell layer in the silicon-carbon composite material. The reaction temperature and time of the coating step falling within appropriate ranges helps to control the thickness of the shell layer within an appropriate range, thereby suppressing the volume swelling of the core portion of the silicon-carbon composite material through the shell layer and ensuring high capacity of the silicon-carbon composite material.

In some embodiments, in the foregoing step S20, the carbonization includes the following step.

S200. Perform heat treatment on the polysilsesquioxane-coated core particles under an inert atmosphere.

In some embodiments, in the foregoing step S200, the heat treatment includes: heating the polysilsesquioxane-coated core particles from room temperature to 300°C to 400°C at a temperature rise velocity of 5°C/min to 10°C/min and maintaining at that temperature for 2 h to 5 h, and then heating to 600°C to 1200°C at a temperature rise velocity of 1°C/min to 5°C/min and maintaining at that temperature for 4 h to 12 h, to obtain the silicon-carbon composite material.

In some embodiments, adjusting the temperature of the carbonization can adjust the thickness of the shell layer in the silicon-carbon composite material. The temperature of the carbonization falling within an appropriate range helps to control the thickness of the shell layer within an appropriate range, thereby suppressing the volume swelling of the core portion of the silicon-carbon composite material through the shell layer and ensuring high capacity of the silicon-carbon composite material.

In some embodiments, in the foregoing step S200, the inert atmosphere is not limited to any type, and may be an inert atmosphere well known in the art. For example, the inert atmosphere may be a nitrogen atmosphere, an argon atmosphere, a helium atmosphere, or the like.

In this application, the organosilicon source can undergo an in-situ condensation reaction on the surface of the silicon-based material and/or graphite under catalysis of the base, to obtain core particles coated with a polysilsesquioxane layer. The resulting product is calcined at high temperature under an inert gas atmosphere, where organic groups in the polysilsesquioxane layer can be converted into amorphous carbon, to ultimately obtain the silicon-carbon composite material with excellent electrochemical performance as described in this application. Adjusting the volume ratio of alcohol to water in the alcohol-water solution, the PH value of the system obtained after the base is added to the alcohol-water solution, the concentration of the organosilicon source, and the reaction temperature of the coating reaction can adjust the shell layer of the silicon-carbon composite material within the range of 5 nm to 100 nm. Adjusting the thickness of the shell layer can control the capacity and the like of the silicon-carbon composite material, thereby allowing the silicon-carbon composite material to have excellent electrochemical performance.

### Negative electrode plate

A third aspect of some embodiments of this application provides a negative electrode plate including a current collector and an active substance layer disposed on a surface of the current collector, where the active substance layer includes the silicon-carbon composite material according to the first aspect of this application or a silicon-carbon composite material prepared by using the method according to the second aspect of this application.

In some embodiments, the active substance layer is a negative electrode active substance layer, where the negative electrode active substance layer does not exclude another negative electrode active material other than the silicon-carbon composite material. The another negative electrode active material is not limited to a specific type, and may be selected based on needs. For example, the another negative electrode active material includes but is not limited to at least one of natural graphite, artificial graphite, meso-carbon microbeads (MCMB), hard carbon, soft carbon, silicon, silicon-carbon composite, SiO, Li-Sn alloy, Li-Sn-O alloy, Sn, SnO, SnO₂, spinel-structured Li₄Ti₅O₁₂, or Li-Al alloy.

In some embodiments, the negative electrode active substance layer further optionally includes a binder. The binder may be at least one selected from styrenebutadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active substance layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode active substance layer further optionally includes another additive such as a thickener (for example, sodium carboxymethyl cellulose (CMC-Na)).

However, this application is not limited to these materials, and the negative electrode plate of this application may alternatively use another well-known material that can be used as a negative electrode active material, a conductive agent, a binder, or a thickener.

In some embodiments, the current collector is a negative electrode current collector, where the negative electrode current collector includes two back-to-back surfaces in a thickness direction of the negative electrode current collector, and the negative electrode active substance layer is disposed on either or both of the two back-to-back surfaces of the negative electrode current collector.

The negative electrode current collector may be made of a metal foil material or a porous metal plate, for example, a foil material or porous plate made of metal such as copper, aluminum, nickel, titanium, or iron or alloys thereof. For example, the negative electrode current collector is copper foil.

The negative electrode plate of this application may be prepared by using a conventional method in the art. For example, the silicon-carbon composite material according to the first aspect of this application or a silicon-carbon composite material prepared by using the method according to the second aspect of this application, and the optional another negative electrode active material, conductive agent, binder, and thickener are dispersed in a solvent, where the solvent may be N-methylpyrrolidone (NMP) or deionized water, to produce a uniform negative electrode slurry, and then the negative electrode slurry is applied onto the negative electrode current collector, followed by processes such as drying and cold pressing, to obtain a negative electrode plate.

The negative electrode plate of this application does not exclude additional functional layers other than the active substance layer. For example, in some embodiments, the negative electrode plate of this application further includes a conductive primer layer (which is, for example, formed by a conductive agent and a binder) sandwiched between the negative electrode current collector and the negative electrode active substance layer and disposed on the surface of the negative electrode current collector. In some other embodiments, the negative electrode plate of this application further includes a protective layer covering the surface of the negative electrode active substance layer.

### Electrochemical device

A fourth aspect of some embodiments of this application provides an electrochemical device including any device in which electrochemical reactions take place to convert chemical energy and electrical energy into each other. For example, the electrochemical device may include but is not limited to a lithium-ion battery or a sodium-ion battery.

In some embodiments, the electrochemical device of this application includes a positive electrode plate, a negative electrode plate, a separator, and an electrolyte.

In some embodiments, the positive electrode plate, the negative electrode plate, and the separator may be made into an electrode assembly through winding or lamination.

The electrochemical device of this application further includes an outer package for packaging the electrode assembly and the electrolyte. In some embodiments, the outer package may be a hard shell, for example, a hard plastic shell, an aluminum shell, or a steel shell, or may be a soft pack, for example, a soft pouch. Material of the soft pack may be plastic, for example, at least one of polypropylene (PP), polybutylene terephthalate (PBT), or polybutylene succinate (PBS).

### [Negative electrode plate]

A negative electrode plate used in the electrochemical device of this application is the negative electrode plate according to the third aspect of some embodiments of this application.

### [Positive electrode plate]

The material, composition and preparation method of a positive electrode plate used in the electrochemical device of this application may include any technology well known in the prior art.

The positive electrode plate includes a positive electrode current collector and a positive electrode active substance layer that is disposed on at least one surface of the positive electrode current collector and that includes a positive electrode active material. For example, the positive electrode current collector includes two back-to-back surfaces in a thickness direction of the positive electrode current collector, and the positive electrode active substance layer is disposed on either or both of the two back-to-back surfaces of the positive electrode current collector.

In some embodiments, the positive electrode active substance layer includes a positive electrode active material, where the positive electrode active material is not limited to a specific type, and may be selected based on needs. For example, the positive electrode active material may include one or more of lithium transition metal oxide, olivine-structured lithium-containing phosphate, or modified compounds thereof. In the electrochemical device of this application, the modified compounds of the foregoing positive electrode active materials may be obtained through doping modification, surface coating modification, or both doping modification and surface coating modification to the positive electrode active materials.

For example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or modified compounds thereof. For example, the olivine-structured lithium-containing phosphate may include one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, or modified compounds thereof. One of these positive electrode active materials may be used alone, or two or more thereof may be used in combination.

In some embodiments, the positive electrode active substance layer further optionally includes a conductive agent. For example, the conductive agent may include at least one of superconducting carbon, acetylene black, super-P, carbon black, Ketjen black, carbon dots, carbon nanotubes, graphene, or carbon nanofiber.

In some embodiments, the positive electrode active substance layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the positive electrode current collector may be a metal foil current collector or a composite current collector. In an example of metal foil, the positive electrode current collector may be an aluminum foil. The composite current collector may include a polymer material matrix and a metal material layer disposed on at least one surface of the polymer material matrix. For example, the metal material may be one or more selected from aluminum, aluminum alloy, nickel, nickel alloy, titanium, titanium alloy, silver, and silver alloy. For example, the polymer material matrix may be selected from polypropylene, polyethylene terephthalate, polybutylene terephthalate, polystyrene, and polyethylene.

The positive electrode plate of this application may be prepared by using a conventional method in the art. For example, the positive electrode active substance layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

The positive electrode plate of this application does not exclude additional functional layers other than the positive electrode active substance layer. For example, in some embodiments, the positive electrode plate of this application further includes a conductive primer layer (which is, for example, formed by a conductive agent and a binder) sandwiched between the positive electrode current collector and the positive electrode active substance layer and disposed on the surface of the positive electrode current collector. In some other embodiments, the positive electrode plate of this application further includes a protective layer covering the surface of the positive electrode active substance layer.

### [Electrolyte]

The electrolyte conducts active ions between the positive electrode plate and the negative electrode plate. An electrolyte that can be used in the electrochemical device of this application may be an electrolyte known in the prior art.

In some embodiments, the electrolyte includes an organic solvent, a lithium salt, and an optional additive. The organic solvent, the lithium salt, and the additive are not limited to specific types, and may be selected based on needs.

In some embodiments, for example, the lithium salt includes but is not limited to at least one of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluorobis(oxalato)phosphate), or LiTFOP (lithium tetrafluoro(oxalato)phosphate). One of the foregoing lithium salts may be used alone, or two or more thereof may be used.

In some embodiments, for example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), or diethyl sulfone (ESE). One of the foregoing organic solvents may be used alone, or two or more thereof may be used. Optionally, two or more of the foregoing organic solvents are used.

In some embodiments, the additive may include a negative electrode film-forming additive and a positive electrode film-forming additive, or may include an additive that can improve some performance of the battery, for example, an additive for improving overcharge resistance of the battery and an additive for improving high-temperature performance or low-temperature performance of the battery.

For example, the additive includes but is not limited to at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (AND), tris(trimethylsilyl) phosphate (TMSP), or tris(trimethylsilyl) borate (TMSB).

The electrolyte may be prepared by using a conventional method in the art. For example, the organic solvent, the lithium salt, and the optional additive may be mixed to produce a uniform electrolyte. A sequence of adding the materials is not particularly limited. For example, the lithium salt and the optional additive are added to the organic solvent, and the mixture is mixed to produce the uniform electrolyte; or the lithium salt is added to the organic solvent, then the optional additive is added to the organic solvent, and the mixture is mixed to produce the uniform electrolyte.

### [Separator]

The separator is disposed between the positive electrode plate and the negative electrode plate to mainly prevent short circuit between positive and negative electrodes and to allow active ions to pass through. The separator is not limited to a particular type in this application, and may be any well-known porous separator with good chemical stability and mechanical stability.

In some embodiments, material of the separator may be one or more selected from glass fiber, non-woven fabric, polyethylene, polypropylene, and polyvinylidene fluoride, but is not limited thereto. The separator may be a single-layer film or a multi-layer composite film. When the separator is a multi-layer composite film, all layers may be made of the same or different materials. In some embodiments, a ceramic coating or a metal oxide coating may also be disposed on the separator.

### Electronic device

A fifth aspect of some embodiments of this application provides an electronic device including the electrochemical device according to the fourth aspect of some embodiments of this application, where the electrochemical device can be used as a power source in the electronic device.

The electronic device of this application is not particularly limited and may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

Content disclosed in this application is described in more detail in the following examples. These examples are merely intended for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

### (1) Preparation of silicon-carbon composite material

(1) 1 g of silicon nanoparticles with a median particle size of 500 nm were uniformly dispersed in an alcohol-water mixed solution of 50 ml ethanol and 5 ml deionized water, 1 ml vinyltriethoxysilane (1 mol/L) was added dropwise and stirred for 0.5 h, and then 1 ml ammonia water solution (1 mol/L) was added and stirred for reaction at 50°C for 6 h, followed by centrifugation, washing, and drying, to obtain vinyl polysilsesquioxane-coated silicon nanoparticles.
(2) The dried vinyl polysilsesquioxane-coated silicon nanoparticles were placed in a tube furnace, and under an argon atmosphere, heated from room temperature to 400°C at a temperature rise velocity of 5°C/min and maintained at that temperature for 2 h, and then heated to 1000°C at a temperature rise velocity of 3°C/min and maintained at that temperature for 8 h, to ultimately obtain a black silicon-carbon composite material.

### Preparation of negative electrode plate

The silicon-carbon composite material, a conductive agent acetylene black, and a binder sodium alginate were mixed at a mass ratio of 70:20:10, an appropriate amount of a solvent deionized water was added, and the mixture was stirred by a vacuum stirrer to produce a negative electrode slurry; and the negative electrode slurry was uniformly applied onto two surfaces of a negative electrode current collector copper foil, then vacuum-dried at 70°C for 12 h, and punched into a circular electrode plate with a diameter of 10 mm, to obtain a negative electrode plate, where a loading amount of the silicon-carbon composite material was about 1.0 mg/cm² to 1.5 mg/cm².

### Preparation of positive electrode plate

A positive electrode active material LiFePO₄, a conductive agent super-P, and a binder PVDF were mixed at a mass ratio of 70:20:10, an appropriate amount of a solvent NMP was added, and the mixture was stirred by a vacuum stirrer to produce a positive electrode slurry; and the positive electrode slurry was uniformly applied onto two surfaces of a positive electrode current collector aluminum foil, then vacuum-dried at 70°C for 12 h, and punched into a circular electrode plate with a diameter of 10 mm, to obtain a positive electrode plate, where a loading amount of the positive electrode active material LiFePO₄ was about 4.0 mg/cm² to 6.0 mg/cm².

### Preparation of electrolyte

Ethylene carbonate (EC), ethyl methyl carbonate (EMC), and diethyl carbonate (DEC) were mixed at a weight ratio of 1:1:1 to produce an organic solvent; and LiPF₆ was dissolved in the organic solvent, then fluoroethylene carbonate (FEC) was added, and the mixture was mixed to produce a uniform electrolyte. Based on a mass of the electrolyte, a mass percentage of the LiPF₆ was 12.5%, and a mass percentage of the fluoroethylene carbonate was 5%.

### Preparation of separator

A porous polypropylene film (from Celgard) was used as a separator.

### Preparation of lithium-ion battery

In a dry Ar glove box, the prepared negative electrode plate, separator, and positive electrode plate were placed in a negative electrode housing of a CR2016 stainless steel battery from bottom to top, an appropriate amount of the electrolyte was injected, a positive electrode housing of the CR2016 stainless steel battery was placed on top, and the battery was sealed using a sealing machine and then removed from the glove box, to obtain a lithium-ion battery.

### Examples 2 to 5

The preparation method of the lithium-ion battery was similar to that in Example 1 except that the median particle size of the Si nanoparticles was adjusted.

### Examples 6 to 9

The preparation method of the lithium-ion battery was similar to that in Example 1 except that during the preparation, the volume ratio of the ethanol to the deionized water, the concentrations of the vinyltriethoxysilane and the ammonia water solution, and the reaction temperature and time were adjusted.

In Example 6, the ethanol was 5 ml and the deionized water was 50 ml; in Example 7, the vinyltriethoxysilane was 2 mol/L and the ammonia water solution was 2 mol/L; in Example 8, the vinyltriethoxysilane was 2 mol/L, the ammonia water solution was 2 mol/L, and the reaction temperature was 80°C; and in Example 9, the vinyltriethoxysilane was 2 mol/L, the ammonia water solution was 2 mol/L, the reaction temperature was 80°C, and the reaction time was 10 h.

### Examples 10 and 11

The preparation method of the lithium-ion battery was similar to that in Example 1 except that during the preparation, the methyltriethoxysilane and the propyltriethoxysilane were used instead of the vinyltriethoxysilane in Example 1 respectively.

### Examples 12 to 14

The preparation method of the lithium-ion battery was similar to that in Example 1 except that during the preparation, the silicon microparticles, the SiO particles, and the graphite were used instead of the Si nanoparticles in Example 1 respectively.

### Comparative Example 1

The preparation method of the lithium-ion battery was similar to that in Example 1 except that during the preparation, dopamine was used instead of the vinyltriethoxysilane, to ultimately obtain a silicon-carbon composite material with a carbon (C) shell layer. The specific preparation process was as follows.
(1) 50 ml 0.02 mol/L tris(hydroxymethyl)aminomethane solution was taken, 14.7 ml 0.02 mol/L HCl solution was added dropwise, then 35.3 ml deionized water was added to prepare 100 ml 0.01 mol/L Tris buffer solution with a PH of 8.5.
(2) 1 g of silicon nanoparticles was added to the buffer solution and magnetically stirred for 10 min, and then 0.4 g of dopamine was added and stirred for 24 h until the solution turned black, followed by centrifugation, washing, and drying, to obtain polydopamine-coated silicon nanoparticles.
(3) The polydopamine-coated silicon nanoparticles were placed in a tube furnace, and under an argon atmosphere, heated from room temperature to 400°C at a temperature rise velocity of 5°C/min and maintained at that temperature for 2 h, and then heated to 800°C at a temperature rise velocity of 3°C/min and maintained at that temperature for 3 h, to ultimately obtain a silicon-carbon composite material with a C shell layer.

### Comparative Example 2

Comparative Example 2 used pure Si nanoparticles without any coating.

The specific parameters of the foregoing examples and comparative examples are shown in Table 1, where "/" indicates that the corresponding component is not added, and "SiO*ₓ*-C" indicates the silicon-carbon composite material.

**Table 1**

| Item | Silicon-carbon composite material | | | | | |
|---|---|---|---|---|---|---|
| | Core portion | | Shell layer | | | Weight ratio of core portion to shell layer |
| | Material | Median particle size (nm) | Material | Thickness (nm) | Percentage of amorphous carbon (%) | |
| Example 1 | Si nanoparticles | 500 | SiO*ₓ*-C | 12 | 6.1 | 65 |
| Example 2 | Si nanoparticles | 200 | SiO*ₓ*-C | 12 | 6.1 | 12 |
| Example 3 | Si nanoparticles | 300 | SiO*ₓ*-C | 12 | 6.1 | 42 |
| Example 4 | Si nanoparticles | 800 | SiO*ₓ*-C | 12 | 6.1 | 83 |
| Example 5 | Si nanoparticles | 1000 | SiO*ₓ*-C | 12 | 6.1 | 97 |
| Example 6 | Si nanoparticles | 500 | SiO*ₓ*-C | 5 | 6.1 | 77 |
| Example 7 | Si nanoparticles | 500 | SiO*ₓ*-C | 20 | 6.1 | 51 |
| Example 8 | Si nanoparticles | 500 | SiO*ₓ*-C | 45 | 6.1 | 35 |
| Example 9 | Si nanoparticles | 500 | SiO*ₓ*-C | 100 | 6.1 | 18 |
| Example 10 | Si nanoparticles | 500 | SiO*ₓ*-C | 16 | 3.9 | 60 |
| Example 11 | Si nanoparticles | 500 | SiO*ₓ*-C | 16 | 11.0 | 67 |
| Example 12 | Si microparticles | 2000 | SiO*ₓ*-C | 12 | 6.1 | 143 |
| Example 13 | SiO particles | 2000 | SiO*ₓ*-C | 12 | 6.1 | 193 |
| Example 14 | Graphite | 2000 | SiO*ₓ*-C | 12 | 6.1 | 93 |
| Comparative Example 1 | Si nanoparticles | 500 | C | 26 | 100 | 86 |
| Comparative Example 2 | Si nanoparticles | 500 | / | / | / | / |

### Tests

### (1) Test of first-cycle discharge capacity and cycling capacity retention rate of button half battery

In a dry Ar glove box, a lithium metal sheet, the negative electrode plate made of the silicon-carbon composite material prepared in Examples 1 to 14 and Comparative Examples 1 and 2, and the separator were placed in a negative electrode housing of a CR2016 stainless steel battery from bottom to top, an appropriate amount of the electrolyte was injected, a positive electrode housing of the CR2016 stainless steel battery was placed on top, and the battery was sealed using a sealing machine and then removed from the glove box, to obtain a button half battery.

At 25°C and normal pressure, the prepared button half battery was discharged to 0.01 V at a constant current of 0.1C and then left standing for 5 min, and a discharge capacity at that time was recorded, which was the first-cycle discharge capacity; and then the battery was charged to 1.5 V at a constant current of 0.1C, charged to a current of 0.05C at a constant voltage, and then left standing for 5 min. This was one charge and discharge cycle, and a charge capacity at that time was recorded, which was the first-cycle charge capacity. The button half battery was tested by using the foregoing method for 50 charge and discharge cycles, and a discharge capacity of each cycle was recorded. The capacity retention rate (%) of the button half battery = discharge capacity of the 50th cycle/discharge capacity of the 2nd cycle × 100%.

The performance of the button half battery reflects the performance of the silicon-carbon composite material prepared in this application.

### (2) Test of energy density and cycling capacity retention rate of lithium-ion battery

At 25°C and normal pressure, the lithium-ion battery in Examples 1 to 14 and Comparative Examples 1 and 2 was charged to 3.8 V at a constant current of 0.1C, charged to a current of 0.05C at a constant voltage, and then left standing for 5 min, and a charge capacity at that time was recorded, which was the first-cycle charge capacity; and then the battery was discharged to 2.5 V at a constant current of 0.1C and left standing for 5 min. This was one charge and discharge cycle, and a discharge capacity at that time was recorded, which was the first-cycle discharge capacity. The lithium-ion battery was tested by using the foregoing method for 100 charge and discharge cycles, and a discharge capacity of each cycle was recorded. The weight energy density (Wh/kg) of the lithium-ion battery = first-cycle discharge capacity/weight of the negative electrode plate. The capacity retention rate (%) of the lithium-ion battery = discharge capacity of the 100th cycle/first-cycle discharge capacity × 100%.

### (3) Test of swelling rate of negative electrode plate

Before cycling of the lithium-ion battery, a cross section of the negative electrode plate was observed using a SEM, and a thickness of the negative electrode plate was measured and denoted as a. The lithium-ion battery was subjected to the foregoing charge and discharge cycle 100 times, then the lithium-ion battery was disassembled, and the negative electrode plate after cycling was removed and washed clean with deionized water. A thickness of the negative electrode plate after cycling was measured by using the same method, and denoted as b. The swelling rate of the negative electrode plate was (b - a)/a × 100%.

Table 2 shows the performance test results of Examples 1 to 14 and Comparative Examples 1 and 2.

**Table 2**

| Item | First-cycle discharge capacity of button half battery (mAh/g) | Capacity retention rate of button half battery (%) | First-cycle discharge capacity of lithium-ion battery (mAh/g) | Capacity retention rate of lithium-ion battery (%) | Weight energy density of lithium-ion battery (Wh/kg) | Swelling rate of negative electrode plate (%) |
|---|---|---|---|---|---|---|
| Example 1 | 2629.1 | 87.4 | 137.1 | 83.2 | 344 | 14.6 |
| Example 2 | 2578.3 | 89.3 | 136.1 | 83.9 | 339 | 14.2 |
| Example 3 | 2598.4 | 88.3 | 136.5 | 83.9 | 340 | 14.3 |
| Example 4 | 2635.8 | 87.2 | 137.6 | 83.6 | 349 | 14.4 |
| Example 5 | 2687.7 | 86.1 | 139.6 | 82.7 | 363 | 15.3 |
| Example 6 | 2698.9 | 86.3 | 141.3 | 82.5 | 362 | 15.7 |
| Example 7 | 2543.3 | 89.9 | 135.8 | 84.0 | 336 | 14.2 |
| Example 8 | 2504.2 | 90.1 | 134.1 | 84.4 | 333 | 14.0 |
| Example 9 | 2433.7 | 90.8 | 132.5 | 84.9 | 331 | 13.6 |
| Example 10 | 2623.5 | 87.2 | 137.2 | 83.4 | 343 | 14.5 |
| Example 11 | 2589.3 | 87.9 | 136.0 | 84.1 | 339 | 14.2 |
| Example 12 | 2700.8 | 55.6 | 144.2 | 45.9 | 374 | 34.7 |
| Example 13 | 1916.3 | 88.1 | 133.8 | 83.1 | 351 | 23.6 |
| Example 14 | 853.9 | 92.6 | 142.9 | 84.5 | 188 | 13.9 |
| Comparative Example 1 | 3318.0 | 76.7 | 143.0 | 78.1 | 281 | 37.8 |
| Comparative Example 2 | 4110.6 | 22.8 | 144.6 | 23.1 | 373 | 67.2 |

It can be learned from comparison and analysis of the examples and comparative examples that the silicon-carbon composite material proposed in this application has high capacity and low swelling rate, and the silicon-carbon composite material of this application being used can increase the energy density of the lithium-ion battery, reduce the swelling rate of the negative electrode plate, and improve the cycling performance of the lithium-ion battery.

The foregoing descriptions are merely specific embodiments of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

## Claims

1. A silicon-carbon composite material, comprising:
a core portion, and
a shell layer on a surface of the core portion; wherein
the core portion comprises a silicon-based material and/or graphite, the shell layer comprises a silicon-carbon composite, and the silicon-carbon composite comprises a silicon-oxygen compound SiOₓ, wherein 0 < *x* < 2.

2. The silicon-carbon composite material according to claim 1, satisfying at least one of condition (1) or (2):
(1) the silicon-based material comprises elemental silicon and/or silicon monoxide; or
(2) the silicon-carbon composite comprises amorphous carbon.

3. The silicon-carbon composite material according to claim 2, wherein the elemental silicon comprises at least one of silicon nanoparticles or silicon microparticles, and a median particle size of the silicon nanoparticles is 200 nm to 1000 nm.

4. The silicon-carbon composite material according to claim 1, wherein materials for preparing the silicon-carbon composite comprise an organosilicon source.

5. The silicon-carbon composite material according to claim 2, wherein the shell layer satisfies at least one of condition (3) or (4):
(3) a thickness of the shell layer is 5 nm to 100 nm; or
(4) based on a total weight of the shell layer, a weight percentage of the amorphous carbon in the shell layer is 2% to 30%.

6. The silicon-carbon composite material according to claim 2, wherein the silicon-oxygen compound SiO*ₓ* is dispersed in the amorphous carbon, and a particle size of the silicon-oxygen compound SiO*ₓ* is 2 nm to 5 nm.

7. The silicon-carbon composite material according to claim 1, wherein a weight ratio of the core portion to the shell layer is 10 to 200.

8. The silicon-carbon composite material according to any one of claims 1 to 7, satisfying at least one of conditions (5) to (9):
(5) a median particle size of the silicon nanoparticles is 300 nm to 800 nm;
(6) a thickness of the shell layer is 5 nm to 20 nm;
(7) based on a total weight of the shell layer, a weight percentage of the amorphous carbon in the shell layer is 3% to 10%;
(8) a particle size of the silicon-oxygen compound SiO*ₓ* is 3 nm to 4 nm; or
(9) a weight ratio of the core portion to the shell layer is 20 to 90.

9. A preparation method of the silicon-carbon composite material according to claim 1, comprising:
a coating step, comprising coating a silicon-based material core and/or a graphite core with an organosilicon source, and converting the organosilicon source into polysilsesquioxane to obtain polysilsesquioxane-coated core particles; and
a carbonization step, comprising carbonizing the polysilsesquioxane coating the core particles to obtain the silicon-carbon composite material.

10. The preparation method according to claim 9, wherein the organosilicon source comprises at least one of vinyltriethoxysilane, vinyltrimethoxysilane, propyltriethoxysilane, propyltrimethoxysilane, ethyltriethoxysilane, ethyltrimethoxysilane, methyltriethoxysilane, methyltrimethoxysilane, phenyltriethoxysilane, or ureidopropyltriethoxysilane.

11. A negative electrode plate, comprising:
a current collector; and
an active substance layer disposed on a surface of the current collector,
wherein the active substance layer comprises the silicon-carbon composite material according to any one of claims 1 to 8 or the silicon-carbon composite material prepared by using the preparation method according to claim 9 or 10.

12. An electrochemical device, comprising the negative electrode plate according to claim 11.
